# FASCICULE DE BREVET EUROPEEN

(11) **EP 0 583 187 B1**
(45) Date de publication et mention de la délivrance du brevet: **27.12.1995**
(21) Numéro de dépôt: 93401924.1
(22) Date de dépôt: 23.07.1993
(51) Int. Cl.: G21C 17/00, G21C 7/08

(54) **Dispositif de contrôle des éléments de guidage d'un tube-guide des équipements internes supérieurs d'un réacteur nucléaire à eau sous pression**
Überprüfungssystem für die Führungselemente eines Führungsrohrs in den oberen Einbauten eines Druckwasserkernreaktors
Inspection device for the guiding components of a guide tube in the upper internals of a pressurized water nuclear reactor

(30) Priorité: 11.08.1992 FR 9209915
(43) Date de publication de la demande: 16.02.1994
(73) Titulaire: FRAMATOME, 92400 Courbevoie (FR)
(72) Inventeur: Cartry, Jean-Pierre, F-69003 Lyon (FR)
(74) Mandataire: Bouget, Lucien

(56) Documents cités:
- EP-A- 0 316 631
- EP-A- 0 390 637
- EP-A- 0 398 792
- FR-A- 2 304 149
- PATENT ABSTRACTS OF JAPAN, vol. 11, no. 68 (P-553) 28 Février 1987 & JP-A-61 231 404

## Description

L'invention concerne un dispositif de contrôle des éléments de guidage d'un tube-guide des équipements internes supérieurs d'un réacteur nucléaire à eau sous pression.

Les réacteurs nucléaires à eau sous pression comportent, à l'intérieur d'une cuve, le coeur du réacteur nucléaire constitué par des assemblages de forme prismatique disposés avec leur axe vertical et, au-dessus du coeur, des équipements internes supérieurs comportant en particulier un ensemble de tubes-guides verticaux permettant d'assurer le guidage de barres de commande constituées par des faisceaux de crayons placés parallèlement les uns aux autres et renfermant un matériau absorbant les neutrons.

Les tubes-guides des équipements internes supérieurs comportent des éléments de guidage discontinus constitués par des plaques planes appelées cartes de guidage percées d'ouvertures et des moyens de guidage continu constitués par des fourreaux et des tubes fendus placés dans la direction verticale du tube, les ouvertures des plaques et les alésages des moyens de guidage continu se trouvant dans des positions correspondant aux positions des crayons absorbants dans le faisceau de la barre de commande.

Les ouvertures traversant les cartes de guidage et les alésages des fourreaux et des tubes fendus constituant les éléments de guidage des crayons absorbants présentent des fentes latérales les mettant en communication avec un espace libre ménagé à la partie centrale du tube-guide et permettant le passage d'un pommeau d'assemblage de la grappe de crayons absorbants parallèles.

Pour assurer la commande du réacteur nucléaire par réglage de la réactivité du coeur, les grappes de crayons absorbants sont déplacées dans la direction verticale, pendant le fonctionnement du réacteur, de manière que les crayons absorbants soient introduits sur une hauteur plus ou moins importante à l'intérieur de certains assemblages du coeur. Au cours de leur déplacement dans la direction verticale, les crayons absorbants des barres de commande sont guidés chacun par une série d'ouvertures alignées des cartes de guidage et par l'alésage interne d'un fourreau de guidage ou d'un tube fendu.

Après un certain temps de fonctionnement du réacteur nucléaire, les ouvertures des cartes de guidage et les alésages des fourreaux et des tubes fendus peuvent présenter une usure se traduisant par exemple par une ovalisation de la section de l'ouverture ou de l'alésage, si bien que le guidage des crayons absorbants n'est plus réalisé de manière tout-à-fait satisfaisante.

Il est donc nécessaire d'effectuer des mesures et des contrôles périodiques sur les éléments de guidage des équipements internes supérieurs du réacteur nucléaire, pour déterminer si certains de ces éléments de guidage doivent être remplacés ou réparés.

Le contrôle des éléments de guidage doit être effectué pendant une période d'arrêt pour contrôle, réparation et/ou rechargement du réacteur nucléaire, au cours de laquelle les équipements internes supérieurs sont extraits de la cuve et disposés dans le fond de la piscine du réacteur, sur un stand de stockage et d'intervention.

Il est nécessaire d'effectuer des mesures extrêmement précises sur les éléments de guidage des équipements internes supérieurs, dans la mesure où l'usure de ces éléments de guidage nécessitant une réparation ou un remplacement se traduit par des différences faibles entre les dimensions des ouvertures ou alésages des éléments de guidage dans différentes directions transversales.

On a proposé dans la demande de brevet EP-A-0 390 637 déposé par la Société FRAMATOME, d'effectuer ces contrôles à partir de mesures comparatives de capacités de condensateurs constitués par des armatures réparties autour de l'axe d'un capteur qui est déplacé de manière sensiblement coaxiale à l'intérieur des éléments de guidage.

Ce dispositif qui permet de réaliser des mesures rapides suivant toute la longueur des éléments de guidage peut cependant manquer de précision et nécessite des éléments complexes pour réaliser le recueil et l'exploitation des mesures.

Le but de l'invention est donc de proposer un dispositif de contrôle des éléments de guidage d'un tube-guide des équipements internes supérieurs d'un réacteur nucléaire à eau sous pression, disposés sous eau dans une piscine, les éléments de guidage comportant, à l'intérieur de tubes-guides ayant leur axe vertical des ouvertures de guidage traversant des plaques horizontales appelées cartes de guidage et des alésages de fourreaux tubulaires à axe vertical, débouchant latéralement dans un espace libre à la partie centrale du tube-guide, ce dispositif permettant d'effectuer un contrôle précis de chacun des éléments de guidage successivement, depuis le niveau supérieur de la piscine.

Dans ce but, le dispositif de contrôle suivant l'invention comporte :
- une perche placée dans la direction verticale dans sa position de service dans la piscine,
- des moyens de centrage de la perche dans l'espace libre central du tube-guide, à sa partie inférieure,
- un élément en forme de lame plate monté pivotant autour d'au moins un axe horizontal sur la partie inférieure de la perche, entre une position rétractée et au moins une position extraite de service, dans laquelle une extrémité externe de l'élément en forme de lame est saillante latéralement par rapport à la perche,
- un capteur comportant au moins un élément monté rotatif autour d'un axe à l'extrémité externe de l'élément en forme de lame, de manière que l'axe de rotation de l'élément rotatif du capteur soit vertical dans la position de service de l'élément en forme de lame,
- des moyens de déplacement par pivotement de l'élément en forme de lame commandés à distance, et
- des moyens de mise en rotation et d'alimentation du capteur et de recueil des signaux de mesure émis par le capteur.

Afin de bien faire comprendre l'invention, on va maintenant décrire, à titre d'exemple non limitatif, en se référant aux figures jointes en annexe, un mode de réalisation d'un dispositif de contrôle suivant l'invention et la mise en oeuvre de ce dispositif de contrôle.

La figure 1 est une vue en élévation schématique des équipements internes supérieurs d'un réacteur nucléaire en position sur un stand de stockage dans la piscine d'un réacteur, pendant une opération de contrôle en utilisant le dispositif suivant l'invention.

La figure 2 est une vue en élévation d'un tube-guide des équipements internes supérieurs représentés sur la figure 1.

La figure 3 est une vue en plan d'une carte de guidage du tube-guide représenté sur la figure 2.

La figure 4 est une vue en coupe transversale des éléments de guidage continu du tube-guide représenté sur la figure 2.

La figure 5 est une vue schématique en élévation de la partie inférieure de la perche du dispositif de contrôle suivant l'invention et suivant un premier mode de réalisation.

La figure 6 est une vue à plus grande échelle de la lame pivotante et du capteur du dispositif représenté sur la figure 5.

La figure 7 est une vue en élévation et en coupe partielle de la lame pivotante d'un dispositif de contrôle suivant l'invention et suivant un second mode de réalisation.

La figure 7A est une vue en coupe suivant A-A de la figure 7.

La figure 7B est une vue en coupe suivant B_B de la figure 7.

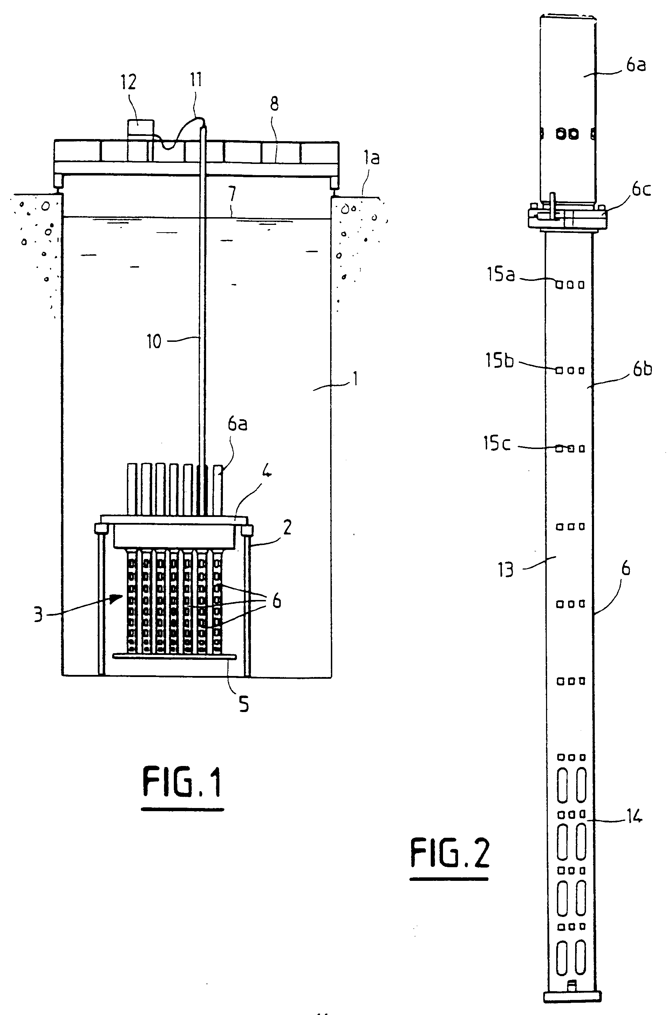

Sur la figure 1, on voit une partie de la piscine 1 d'un réacteur nucléaire sur le fond de laquelle repose un stand 2 permettant le stockage des équipements internes supérieurs 3 du réacteur nucléaire.

Les équipements internes supérieurs 3 comportent une plaque supérieure 4 et une plaque inférieure 5 constituant la plaque supérieure du coeur du réacteur nucléaire venant en appui sur l'extrémité supérieure des assemblages combustibles, lorsque les équipements internes supérieurs 3 sont en position de service dans la cuve du réacteur. Les équipements internes 3 comportent de plus un ensemble de tubes-guides 6 reliés à la plaque supérieure 4 et à la plaque inférieure 5 des équipements internes et comportant chacun une première partie intercalée entre la plaque supérieure 4 et la plaque inférieure 5 et une seconde partie fixée au-dessus de la plaque supérieure 4.

Des colonnes-entretoises permettant de maintenir les plaques 4 et 5 et d'assurer la rigidité des équipements internes 3 sont disposées entre les plaques 4 et 5 parallèlement aux tubes 6.

Lors d'un arrêt du réacteur pour réparation et rechargement, les équipements internes 3 sont extraits de la cuve du réacteur et disposés sur le stand de stockage 2, les équipements internes 3 venant reposer par l'intermédiaire de la plaque supérieure 4 sur des colonnes de support verticales du stand 2.

La piscine 1 est remplie d'eau jusqu'à un niveau 7 et l'intervention est réalisée depuis un pont- passerelle 8 disposé au-dessus du niveau supérieur 1a de la piscine 1.

Le dispositif d'intervention suivant l'invention comporte en particulier une perche de grande longueur 10 qui peut être manipulée depuis le pont-passerelle 8 pour être mise en place à l'intérieur d'un tube-guide 6, comme il sera expliqué plus loin.

Un câble 11 comportant des conducteurs qui sont reliés à leur partie inférieure au capteur du dispositif de contrôle présente une extrémité au niveau du pont-passerelle 8 qui est reliée à une unité 12 de traitement et d'enregistrement des paramètres de mesure.

Le câble 11 permet d'alimenter le capteur en courant électrique et d'assurer éventuellement sa mise en rotation, comme il sera expliqué plus loin.

Sur la figure 2, on voit un tube-guide 6 des équipements internes 3 représentés sur la figure 1.

Le tube-guide 6 comporte une partie supérieure 6a et une partie inférieure 6b qui sont reliées entre elles par des moyens d'assemblage 6c comportant des brides rapportées l'une sur l'autre et fixées par des vis.

La partie supérieure 6a du tube-guide 6 est destinée à venir se placer au-dessus de la plaque supérieure 4 des équipements internes supérieurs et la partie inférieure 6b entre la plaque supérieure 4 et la plaque inférieure 5.

Les deux parties 6a et 6b du tube-guide comportent une enveloppe externe sensiblement cylindrique qui est percée d'ouvertures et qui renferme des éléments de guidage.

La partie inférieure 6b qui constitue la partie principale de guidage du tube 6 comporte elle-même une partie supérieure 13 constituant la partie de guidage discontinue du tube-guide et une partie inférieure 14 constituant la partie de guidage continu des barres de commande.

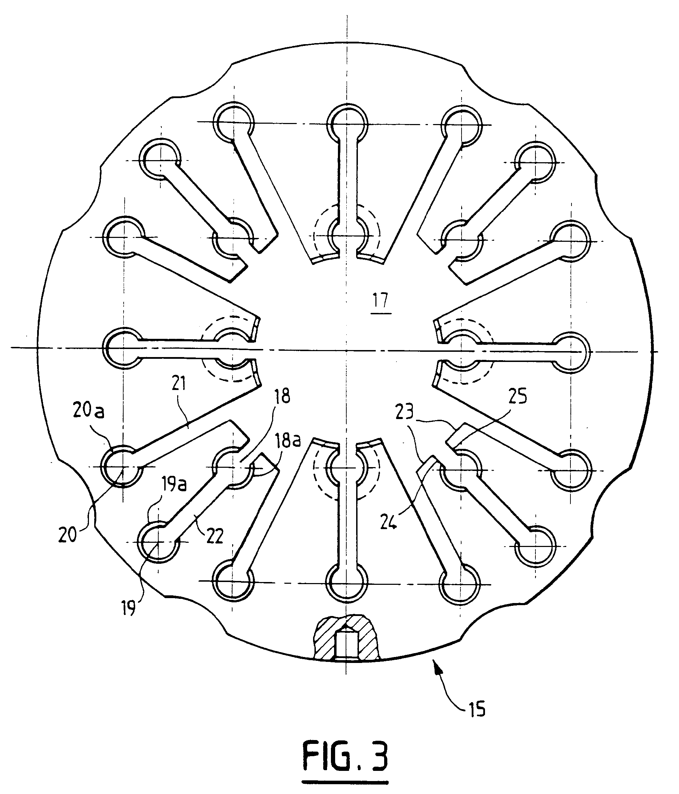

Dans la partie de guidage discontinu 13, l'enveloppe externe du tube 6 renferme des cartes de guidage 15 telles que représentées sur la figure 3, dans des emplacements successifs 15a, 15b, 15c, ... régulièrement espacés suivant la longueur de la partie 13 de la section inférieure 6b du tube 6.

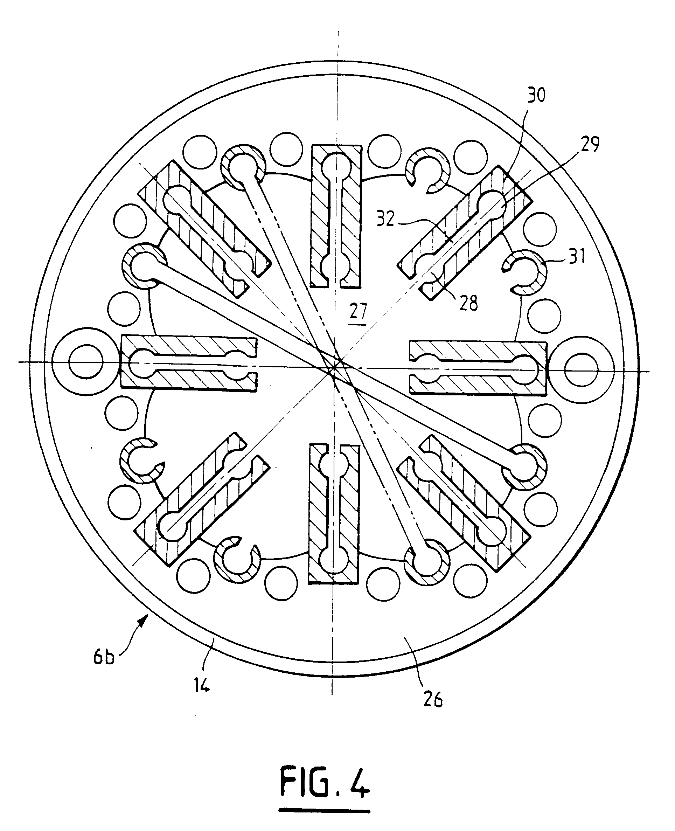

Suivant toute la longueur de la partie de guidage continu 14 de la section inférieure 6b du tube-guide sont disposés des éléments de guidage continus tels que représentés sur la figure 4.

Les plaques de guidage discontinues ou cartes de guidage 15 telles que représentées sur la figure 3 sont constituées par des plaques métalliques découpées, de manière à ménager un espace libre 17 à la partie centrale de la carte 15 et des ouvertures de guidage telles que 18, 19 et 20 des crayons absorbants de la barre de commande qui peut être introduite et guidée dans le tube-guide renfermant des cartes de guidage 15.

Les ouvertures telles que 20 sont disposées à l'extrémité d'une fente 21 traversant la carte de guidage 15 et débouchant dans l'espace libre central 17.

Les ouvertures telles que 18 et 19 sont alignées suivant une fente 22 débouchant également dans l'espace libre central 17.

De cette manière, toutes les ouvertures de guidage 18, 19 et 20 de la carte de guidage 15 débouchent dans l'espace libre central 17.

La partie des ouvertures 18 communiquant avec l'espace libre central 17 présente des surfaces circonférentielles 23 et des surfaces de direction radiale 24 et 25.

Certaines de ces surfaces peuvent être revêtues d'une pièce ou d'une couche anti-usure.

Les surfaces telles que 23, 24 et 25 qui ne subissent pas d'usure notable par frottement pendant l'utilisation des barres de commande sont utilisées comme surfaces de référence lors de l'utilisation du dispositif de contrôle suivant l'invention.

Sur la figure 4, on voit en section la partie de guidage continu 14 du tube-guide 6 qui comporte, à l'intérieur de l'enveloppe cylindrique de la section 6b du tube-guide, un support 26 comportant une ouverture centrale de direction axiale définissant un espace libre 27 dans le prolongement de l'espace libre 17, à l'intérieur du tube-guide.

Les éléments de guidage continus sont fixés sur le support 26 et sont constitués des fourreaux de guidage 30 et des tubes fendus 31 disposés dans la direction axiale du tube-guide 6.

Chacun des fourreaux de guidage 30 délimite deux alésages de guidage 28 et 29 reliés entre eux par une fente 32 et débouchant dans l'espace libre 27.

Les tubes 31 comportent une fente à l'intérieur de l'espace libre 27.

De cette manière, les alésages de guidage 28 et 29 des fourreaux 30 et les tubes fendus 31 communiquent tous avec l'espace libre central 27 du tube-guide.

Les parties d'extrémité des fourreaux de guidage situées dans l'espace libre 27 et les surfaces des tubes 31 délimitant les fentes de ces tubes constituent des surfaces de référence ne subissant pas d'usure notable lors des déplacements des barres de commande.

Les ouvertures 28, 29, et 30 des cartes de guidage sont disposées de manière à reproduire en section transversale le réseau des tubes-guides d'un assemblage du coeur du réacteur nucléaire dans lesquels sont introduits les crayons absorbants d'une barre de commande.

En outre, les cartes de guidage 15 sont disposées parallèlement les unes aux autres dans des positions telles que les ouvertures des différentes cartes successives soient alignées.

Les alésages de guidage continu 28 et 29 des fourreaux 30 et les alésages des tubes 31 sont d'autre part également disposés de manière à reproduire le réseau des tubes-guides d'un assemblage du réacteur nucléaire.

Les alésages des éléments de guidage continus sont alignés avec les séries d'ouvertures des cartes de guidage.

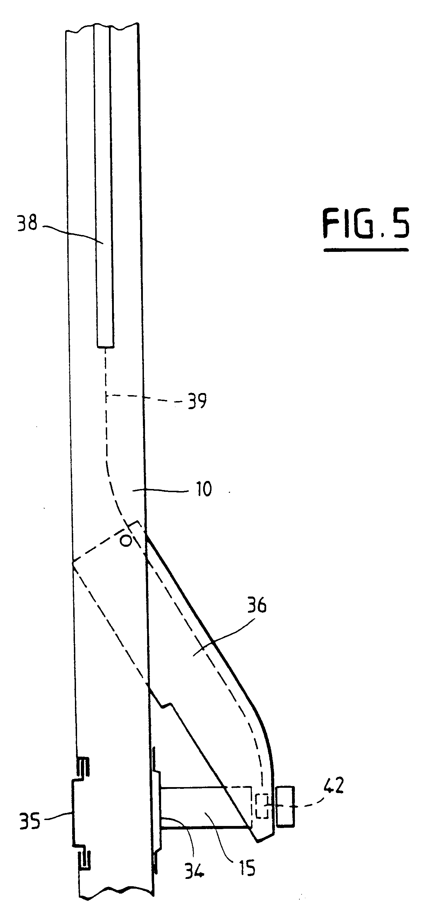

Sur la figure 5, on a représenté la partie inférieure de la perche 10 du dispositif de contrôle qui comporte une enveloppe tubulaire dont la section transversale présente une forme et des dimensions permettant son introduction dans l'espace libre 17 de la partie centrale des cartes de guidage et dans l'espace libre 27 entre les parties internes des fourreaux de guidage 30 dans la partie de guidage continu 14 du tube-guide.

La perche comporte au voisinage de son extrémité inférieure, une butée 34 en saillie radiale vers l'extérieur et un ressort 35 monté dans l'enveloppe de la perche 10, de manière à se trouver en saillie par rapport à l'enveloppe de la perche 10. La butée 34 et le ressort 35 sont placés à l'opposé l'un de l'autre par rapport à l'axe de la perche.

Lorsque la perche 10 est introduite dans l'espace central des cartes de guidage et de la partie de guidage continu du tube-guide, les éléments 34 et 35 permettent de réaliser, par appui de ces éléments sur des parties de la surface interne des cartes de guidage et des fourreaux, le centrage et l'immobilisation de la perche dans le tube-guide, à une certaine hauteur à l'intérieur de ce tube-guide.

L'enveloppe de la perche 10 comporte une fente longitudinale au voisinage de sa partie inférieure, au niveau de laquelle est montée une lame pivotante 36 ou sabre susceptible de se déplacer par rapport à la perche, par pivotement, entre une position rétractée à l'intérieur de l'enveloppe de la perche et une position extraite, comme il sera expliqué plus loin.

A l'intérieur de l'enveloppe de la perche 10 est fixé un tube métallique 38, dans une disposition parallèle à l'axe de l'enveloppe 10.

Le tube 38 se raccorde à une gaine souple 39 en matière plastique assurant en particulier la mise en rotation du capteur du dispositif de contrôle.

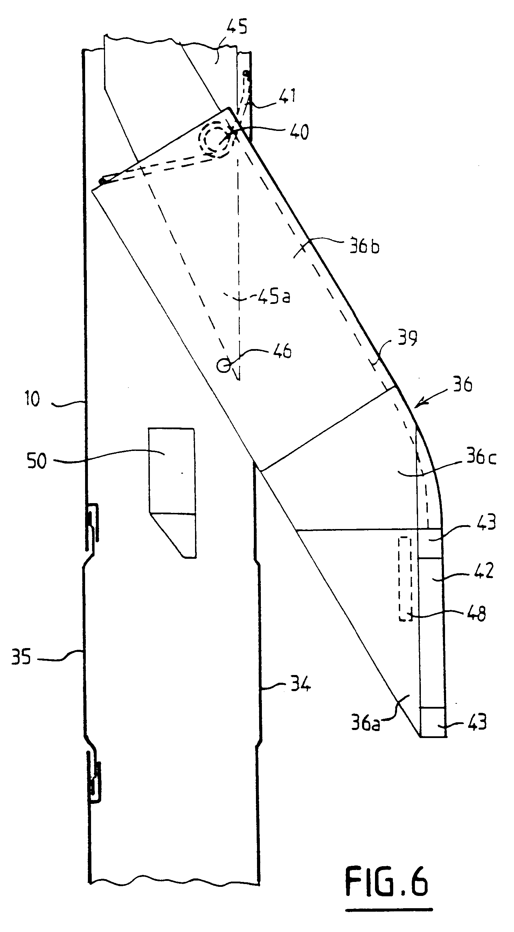

Comme il est visible sur la figure 6, le sabre 36 est monté pivotant sur l'enveloppe de la perche 10 par l'intermédiaire d'un axe d'articulation 40 de direction transversale en position horizontale lorsque la perche 10 est en service dans les équipements internes supérieurs du réacteur.

Le sabre 36 peut être placé en position extraite comme représenté sur la figure 6, par pivotement vers l'extérieur et passage à travers la fente longitudinale de l'enveloppe de la perche 10.

Un ressort 41 dont une extrémité est fixée sur l'enveloppe de la perche 10 vient en appui sur la lame de sabre 36, de manière à la maintenir en position extraite telle que représentée sur la figure 6.

Le sabre 36 comporte une extrémité externe 36a sur laquelle est monté rotatif le capteur 42 du dispositif de contrôle, par l'intermédiaire de paliers alignés 43 fixés sur la partie d'extrémité 36a du sabre 36.

La gaine souple 39 est reliée à l'une de ses extrémités au capteur 42 et à son autre extrémité au tube 38 ; un moyen de mises en rotation, au-dessus du niveau supérieur de la piscine assure l'entraînement en rotation du tube 38 et de la gaine souple 39.

La partie d'extrémité externe 36a du sabre 36 est reliée au corps 36b du sabre sur lequel est fixé l'axe d'articulation 40, par l'intermédiaire d'une pièce d'adaptation 36c, de manière que, dans la position extraite du sabre 36 telle que représentée sur la figure 6, le capteur 42 qui est de préférence de forme cylindrique et les paliers 43 aient leur axe dans la direction verticale.

En outre, la pièce d'adaptation 36c présente un forme et des dimensions telles que l'axe vertical de rotation du capteur 42 se trouve à une distance de l'axe de la perche 10 permettant l'introduction du capteur, dans l'une des ouvertures ou l'un des alésages de guidage décrits plus haut en regard des figures 3 et 4.

Le sabre 36 peut être utilisé successivement pour assurer la mise en place du capteur dans des ouvertures ou alésages situés à des distances plus ou moins importantes de l'axe du tube-guide, en changeant la pièce d'adaptation 36c.

Il est également possible de réaliser le corps 36b du sabre sous la forme d'un parallélogramme déformable permettant de maintenir le capteur, à l'extrémité de la partie 36a du sabre 36, dans une disposition parallèle à l'axe de la perche 10 quelle que soit la distance du capteur à cet axe.

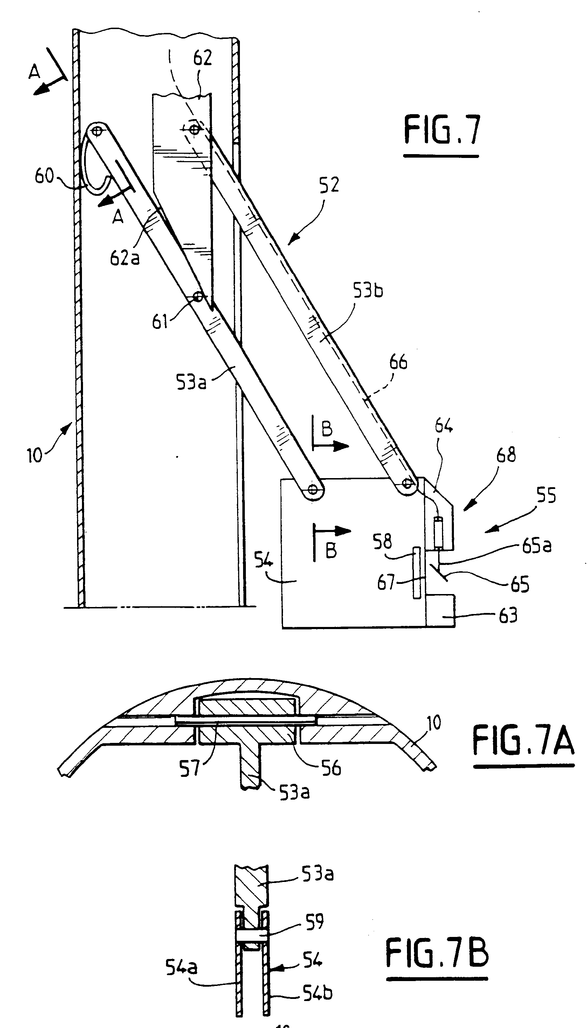

Un tel mode de réalisation sera décrit ci-dessous en se référant aux figures 7, 7A et 7B.

On peut ainsi effectuer le contrôle de chacun des éléments de guidage d'un tube-guide successivement.

Une pièce de commande 45 dont l'extrémité 45a présente la forme d'un coin permet de régler la position du sabre 36 monté pivotant qui comporte un pion 46 en saillie sur l'une de ses faces constituant une butée destinée à venir en contact avec le bord incliné du coin 45a.

Par déplacement de la pièce de commande 45 dans la direction axiale, il est possible de régler la position d'extraction du sabre 36 qui est rappelé en position d'extraction maximale par le ressort 41.

Le capteur 42 peut être entraîné en rotation par l'intermédiaire de la gaine tubulaire 39 qui est susceptible de transmettre une rotation tout en subissant une flexion, en particulier le long du bord du sabre 36.

En outre, un ressort d'appui latéral 48 est fixé sur la partie d'extrémité externe 36a sur une des faces de la lame du sabre 36.

Le ressort 48 permet d'assurer l'appui latéral du sabre sur la surface de référence des éléments de guidage.

Le capteur 42 peut être réalisé sous la forme d'un capteur capacitif, d'un capteur à courants de Foucault, optique ou à ultrasons ou encore d'un radar laser.

La gaine tubulaire souple 39 transmettant la rotation au capteur 42 peut être constituée par un tube de Rilsan à l'intérieur duquel passent les câbles d'alimentation du capteur 42 et de recueil des informations en provenance du capteur.

On va maintenant décrire, en se référant à l'ensemble des figures, une opération de contrôle d'un élément de guidage d'un tube-guide en utilisant le dispositif suivant l'invention.

Le dispositif est équipé d'un sabre 36 permettant, par extraction du sabre commandée par le ressort 41 et la pièce 45, de placer le capteur 42 dans une position telle que son axe soit aligné parfaitement avec l'axe vertical d'un élément de guidage du tube-guide.

La perche 10 est descendue à l'intérieur de la piscine avec le sabre en position rétractée et maintenu dans cette position par la pièce de commande 45 de manière que sa partie inférieure s'engage dans l'espace libre central d'un tube-guide.

La perche 10 est descendue à l'intérieur du tube-guide jusqu'à un niveau tel que la partie inférieure externe 36a du sabre se trouve légèrement au-dessus d'un élément de guidage, tel qu'une ouverture d'une carte de guidage ou un alésage d'un fourreau, dont on veut réaliser le contrôle.

Le sabre est alors placé en position d'extraction en relevant la pièce de commande 45 et en fixant cette pièce dans une position prédéterminée correspondant à la position voulue d'extraction du sabre.

La perche est alors descendue de manière que le capteur 42 pénètre à l'intérieur de l'élément de guidage.

Le capteur 42 est mis en rotation par l'intermédiaire de la gaine flexible 39, de sorte que les mesures effectuées par le capteur et transmises par l'intermédiaire des conducteurs passant à l'intérieur de la gaine 39 soient représentatives de la forme de l'élément de guidage sur toute sa circonférence.

Les mesures sont enregistrées et exploitées au-dessus du niveau de la piscine, de telle sorte qu'il est possible de déterminer si l'élément de guidage est satisfaisant ou non dans la partie contrôlée.

Une caméra de télévision 50 permet de contrôler visuellement la mise en place du sabre 36 par rapport aux éléments de guidage.

Sur les figures 7, 7A et 7B, on a représenté un sabre réalisé sous la forme d'un parallélogramme déformable permettant de maintenir le capteur constamment dans une disposition parallèle à l'axe de la perche 10.

L'élément désigné dans son ensemble par le repère 52 sur la figure 7 et qui est l'équivalent de la lame de sabre 36 du dispositif des figures 5 et 6, comporte principalement deux bras parallèles 53a et 53b et une cellule de mesure 54 portant le capteur de mesure 55.

Les bras 53a et 53b sont articulés à l'une de leurs extrémités sur la perche 10 au voisinage de sa partie inférieure, en deux points situés dans un plan de section droite de la perche 10 et à leurs autres extrémités sur le corps de la cellule de mesure 54 qui constitue la partie externe du sabre. Les bras 53a et 53b sont montés sur la perche 10 au niveau d'une fente longitudinale d'une largeur suffisante pour permettre le passage de l'élément 52 dont les bras 53a et 53b et la cellule de mesure 54 ont une forme plate, comme il est visible sur les figures 7A et 7B.

Comme représenté sur la figure 7A, le bras 53a en forme de lame comporte à l'une de ses extrémités un épanouissement 56 venant s'engager dans une échancrure usinée dans une partie en surépaisseur de la paroi de la perche 10. L'épanouissement 56 et la partie en surépaisseur de la perche sont percés d'ouvertures qui viennent se placer dans le prolongement axial l'une de l'autre lorsque l'epanouissement 56 du bras est engagé en position de montage dans l'échancrure. Un axe d'articulation 57 engagé dans les ouvertures alignées permet de relier le bras 53a à la perche 10 de manière articulée. Le bras 53b est articulé d'une manière identique sur la perche 10, par l'intermédiaire de l'une de ses extrémités.

Comme représenté sur la figure 7B, l'extrémité du bras 53a opposée à son extrémité reliée à la perche 10 est articulée sur le corps de la cellule de mesure 54 constitué de deux plaques planes parallèles 54a et 54b fixées l'une sur l'autre avec un certain espacement.

L'extrémité du bras 53a est introduite entre les plaques 54a et 54b et reliée à la cellule 54 par un axe d'articulation 59.

La cellule 54 porte un ressort d'appui latéral 58. Le bras 53a est rappelé vers l'extérieur par un ressort courbe 60 qui assure, par l'intermédiaire de la cellule 54 et du second bras 53b le rappel de l'ensemble 52 en position extraite.

Le bras 53a porte une butée 61 destinée à venir en contact avec le bord incliné 62a d'une pièce de commande 62 montée mobile dans la direction axiale de la perche 10.

Par déplacement de la pièce de commande dans la direction axiale, il est possible de régler la position d'extraction du sabre qui est rappelé en position d'extraction maximale par le ressort 60.

Le capteur 55 est constitué par une diode laser 63 fixée sur un bord de la cellule 54 en vis-à-vis d'un support 64 constituant un palier pour l'axe 65a d'un miroir tournant 65. Un flexible 66 disposé suivant la longueur du bras 53b est relié à l'une de ses extrémités à l'axe 65a du miroir 65. La seconde extrémité du flexible est reliée à un moyen d'entraînement en rotation du flexible autour de son axe. On peut ainsi faire tourner le miroir 65 qui est incliné de manière à être orienté soit vers une surface de référence 67 de la cellule 54 (cas de la figure 7), soit vers l'extérieur de la cellule 54.

Lorsque le capteur 55 est introduit dans un élément de guidage tel qu'une ouverture d'une carte de guidage ou l'alésage d'un fourreau de guidage, le faisceau laser émis par la diode 63 est réfléchi par le miroir tournant 65, ce qui permet de balayer la surface intérieure de l'élément de guidage. Le faisceau réfléchi par l'élément de guidage est récupéré et traité de manière qu'on obtienne des mesures de distance selon la méthode du radar à laser. On contrôle ainsi de manière très précise la forme et les dimensions des éléments de guidage. Un réétalonnage du radar laser peut être réalisé périodiquement par réflexion du faisceau sur la surface 67 de la cellule de mesure.

Après qu'on ait effectué le contrôle d'une partie d'un élément de guidage, la perche 10 peut être déplacée en translation et en rotation autour de son axe, de manière à réaliser l'introduction du capteur dans un second élément de guidage, par exemple dans une seconde ouverture d'une carte de guidage 15.

Le sabre peut également être placé dans une seconde position d'extraction permettant sa mise en place à l'intérieur d'un élément de guidage situé à une distance différente de l'axe du tube-guide.

On pourra par exemple effectuer successivement le contrôle des ouvertures 18 et 19 des cartes de guidage et des alésages 28 et 29 des fourreaux 30.

Il est possible également, dans le cas des éléments de guidage continu de déplacer la perche et le sabre dans la direction axiale du tube-guide pour réaliser le contrôle de l'élément de guidage continu suivant toute sa longueur.

Le dispositif suivant l'invention permet de réaliser une mise en place très précise du capteur de manière à assurer son introduction dans un élément de guidage déterminé et à obtenir des mesures d'usure extrêmement précises.

Le dispositif de contrôle, grâce à la présence du sabre porte-capteur, permet de réaliser successivement le contrôle de tous les éléments de guidage d'un tube-guide, de sorte qu'il n'est pas nécessaire de disposer de moyens de contrôle complexes reproduisant la géométrie des éléments de guidage.

En outre, la mise en place du capteur est extrêmement précise, du fait de la coopération des éléments d'appui du sabre et des surfaces de référence des éléments de guidage.

L'invention ne se limite pas au mode de réalisation qui a été décrit.

C'est ainsi que la lame pivotante ou sabre peut être montée d'une manière différente de celle qui a été décrite et actionnée pour son déplacement dans le sens de l'extraction ou de la rétraction par des moyens différents d'un ressort et d'un élément de commande ayant la forme d'un coin.

La mise en rotation d'une partie au moins du capteur pour réaliser le balayage peut être assurée par un moyen différent d'un élément de transmission souple commandé depuis l'extrémité supérieure de la perche. Le capteur pourrait être mis en rotation par un moteur ou un motoréducteur alimenté en courant électrique par l'intermédiaire d'un câble passant à l'intérieur de l'enveloppe de la perche.

Le sabre peut comporter tout dispositif d'adaptation permettant de placer le capteur en position de contrôle d'un élément de guidage quelconque d'un tube-guide.

Enfin, le dispositif suivant l'invention peut être utilisé pour le contrôle des éléments de guidage de tout tube-guide des équipements internes supérieurs d'un réacteur nucléaire à eau sous pression.

## Revendications

1. Dispositif de contrôle des éléments de guidage (18, 19, 28, 29, 31) d'un tube-guide (6) des équipements internes supérieurs (3) d'un réacteur nucléaire à eau sous pression, disposés sous eau dans une piscine (1), les éléments de guidage (18, 19, 28, 29, 31) comportant, à l'intérieur de tubes-guides (6) ayant un axe vertical, des ouvertures de guidage (18, 19) traversant des plaques horizontales (15) appelées cartes de guidage et des alésages (28, 29) de fourreaux tubulaires (30, 31) à axe vertical, débouchant latéralement dans un espace libre (17, 27) à la partie centrale du tube-guide (6) caractérisé par le fait qu'il comporte :
- une perche (10) placée dans la direction verticale dans sa position de service dans la piscine (1),
- des moyens de centrage (34, 35) de la perche (10) dans l'espace libre central (17, 27) du tube-guide (6), à sa partie inférieure,
- un élément (36, 52) en forme de lame plate monté pivotant autour d'au moins un axe horizontal (40) sur la partie inférieure de la perche (10), entre une position rétractée et au moins une position extraite de service, dans laquelle une extrémité externe (36a, 54) de l'élément (36, 52) en forme de lame est saillante latéralement par rapport à la perche (10),
- un capteur (42, 55) comportant au moins un élément (65) monté rotatif autour d'un axe, à l'extrémité externe (36a, 54) de l'élément (36, 52) en forme de lame, de manière que l'axe de rotation de l'élément rotatif du capteur (42) soit vertical dans la position de service de l'élément en forme de lame (36, 52),
- des moyens (41, 45) de déplacement par pivotement de l'élément en forme de lame (36), commandés à distance, et
- des moyens (39, 66) de mise en rotation et d'alimentation du capteur (42, 55) et de recueil des signaux de mesure émis par le capteur (42, 55).

2. Dispositif suivant la revendication 1 caractérisé par le fait que l'élément en forme de lame (52) comporte une cellule de mesure (54) sur laquelle est fixé le capteur (55) et deux bras (53a, 53b) parallèles articulés à l'une de leurs extrémités sur la perche (10) et à leur autre extrémité sur la cellule de mesure (54), de manière à constituer un parallélogramme articulé.

3. Dispositif suivant la revendication 1, caractérisé par le fait que la partie externe (36a) de l'élément (36) en forme de lame est fixée sur une partie (36b) de l'élément en forme de lame (36) montée pivotante sur la perche (10), par l'intermédiaire d'une pièce d'adaptation (36c) permettant de régler la position du capteur (42) correspondant à la position extraite de l'élément en forme de lame (36).

4. Dispositif suivant l'une quelconque des revendications 1, 2 et 3, caractérisé par le fait que les moyens de mise en rotation de l'élément rotatif (65) du capteur (42, 55) sont constitués par un élément flexible (39, 66) disposé suivant la longueur de la perche (10), relié à l'élément rotatif (65) du capteur (42, 55) à l'une de ses extrémités et comportant une seconde extrémité à la partie supérieure de la perche (10) par laquelle on transmet une rotation à l'élément flexible (39, 66) et par son intermédiaire au capteur (42, 55).

5. Dispositif suivant la revendication 4, caractérisé par le fait que l'élément flexible de transmission de la rotation est un tube en matériau souple.

6. Dispositif suivant l'une quelconque des revendications 1 à 5, caractérisé par le fait que les moyens de déplacement par pivotement de l'élément en forme de lame (36, 52) et de réglage de la position extraite de l'élément en forme de lame (36, 52) sont constitués par un ressort (41, 60) de rappel de l'élément en forme de lame (36, 52) dans une position totalement extraite et un élément de commande (45, 62) mobile suivant la direction axiale de la perche (10) comportant une partie d'extrémité (45a, 62a) en forme de coin destiné à coopérer avec une butée (46, 61) solidaire de l'élément en forme de lame (36, 52).

7. Dispositif suivant l'une quelconque des revendications 1 à 6, caractérisé par le fait qu'un ressort d'appui (48, 58) est fixé sur une face de la partie externe (36a, 54) de l'élément (36, 52) en forme de lame.

8. Dispositif suivant l'une quelconque des revendications 1 à 7, caractérisé par le fait que les moyens de centrage de la perche (10) dans l'espace libre central (17, 27) du tube-guide (6) sont constitués par une butée (34) en saillie vers l'extérieur sur la surface externe de la perche et par un ressort (35) fixé sur la surface externe de la perche (10) de manière à se trouver en saillie radiale et dans une position opposée à la butée (34) par rapport à l'axe de la perche.

9. Dispositif suivant l'une quelconque des revendications 1 à 8, caractérisé par le fait que le capteur (42) est un capteur appartenant à l'un des types suivants : capteur capacitif, capteur à courants de Foucault, capteur à ultrasons, radar laser.

10. Dispositif suivant la revendication 9, caractérisé par le fait que le capteur (55) du type radar laser comporte une diode (63) et un miroir tournant (65) montés sur une cellule de mesure (54) constituant la partie d'extrémité externe de l'élément en forme de lame (52).

11. Dispositif suivant la revendication 10, caractérisé par le fait que la cellule de mesure (54) comporte une surface de référence (67) pour assurer un étalonnage des mesures effectuées par le radar laser.

## Claims

1. Device for checking the guide elements (18, 19, 28, 29, 31) of a guide tube (6) for the upper internals (3) of a pressurised water nuclear reactor, arranged underwater in a pool (1), the guide elements (18, 19, 28, 29, 31) comprising inside guide tubes (6) having a vertical axis, guide openings (18, 19) passing through horizontal plates (15) called guide plates and bores (28, 29) of tubular sheaths (30, 31) having a vertical axis and opening laterally into a free space (17, 27) at the central part of the guide tube (6); characterised in that it comprises:
- a mast (10) placed in the vertical direction in its service position in the pool (1),
- means (34, 35) for centring the mast (10) in the central free space (17, 27) of the guide tube (6) at its lower part,
- a flat blade-shaped element (36, 52) mounted so as to pivot about at least one horizontal pin (40) on the lower part of the mast (10), between a retracted position and at least one extracted service position in which an external end (36a, 54) of the blade-shaped element (36, 52) projects laterally relative to the mast (10),
- a sensor (42, 55) comprising at least one element (65) mounted so as to rotate about a pin at the outer end (36a, 54) of the blade-shaped element (36, 52) so that the rotation pin of the rotary element of the sensor (42) is vertical in the service position of the blade-shaped element (36, 52),
- remote control means (41, 45) for pivotally displacing the blade-shaped element (36), and
- means (39, 66) for rotating and powering the sensor (42, 55) and for gathering the measurement signals emitted by the sensor (42, 55).

2. Device according to Claim 1, characterised in that the blade-shaped element (52) comprises a measurement cell (54) to which the sensor (55) is fixed, and two parallel arms (53a, 53b) articulated at one of their ends to the mast (10) and at their other end to the measurement cell (54) so as to form an articulated parallelogram.

3. Device according to Claim 1, characterised in that the outer part (36a) of the blade-shaped element (36) is fixed to a part (36b) of the blade-shaped element (36) which is pivotally mounted on the mast (10) by means of a fitting component (36c) making it possible to adjust the position of the sensor (42) corresponding to the extracted position of the blade-shaped element (36).

4. Device according to any one of Claims 1, 2 and 3, characterised in that the means for rotating the rotary element (65) of the sensor (42, 55) consist of a flexible element (39, 66) arranged along the length of the mast (10), connected at one of its ends to the rotary element (65) of the sensor (42, 55) and comprising a second end at the upper part of the mast (10) via which rotation is transmitted to the flexible element (39, 66) and, by means of the latter, to the sensor (42, 55).

5. Device according to Claim 4, characterised in that the flexible element for transmitting rotation is a tube made of flexible material.

6. Device according to any one of Claims 1 to 5, characterised in that the means for pivotably displacing the blade-shaped element (36, 52) and for adjusting the extracted position of the blade-shaped element (36, 52) consist of:- a spring (41, 60) for returning the blade-shaped element (36, 52) into a totally extracted position, and a control element (45, 62) which can move along the axial direction of the mast (10) and comprising a wedge-shaped end part (45a, 62a) intended to interact with a stop (46, 61) securely fastened to the blade-shaped element (36, 52).

7. Device according to any one of Claims 1 to 6, characterised in that a bearing spring (48, 58) is fixed to one face of the outer part (36a, 54) of the blade-shaped element (36, 52).

8. Device according to any one of Claims 1 to 7, characterised in that the means for centring the mast (10) in the central free space (17, 27) of the guide tube (6) consist of a stop (34) projecting outwardly on the outer surface of the mast and of a spring (35) fixed to the outer surface of the mast (10) so as to project radially and to be in a position opposite the stop (34) relative to the axis of the mast.

9. Device according to any one of Claims 1 to 8, characterised in that the sensor (42) is a sensor belonging to one of the following types: capacitance sensor, eddy current sensor, ultrasound sensor, laser radar.

10. Device according to Claim 9, characterised in that the sensor (55) is of the laser radar type and comprises a diode (63) and a rotating mirror (65) mounted on a measurement cell (54) forming the outer end part of the blade-shaped element (52).

11. Device according to Claim 10, characterised in that the measurement cell (54) comprises a reference surface (67) so as to provide calibration of the measurements carried out by the laser radar.

## Patentansprüche

1. Überprüfungsvorrichtung der Führungselemente (18, 19, 28, 29, 31) eines Führungsrohrs (6) von inneren oberen Ausrüstungen (3) eines Druckwasser-Kernreaktors, die unter Wasser in einem Becken (1) angeordnet sind, wobei die Führungselemente (18, 19, 28, 29, 31) im Inneren von Führungsrohren (6), die eine vertikale Achse haben, Führungsöffnungen (18, 19) aufweisen, die horizontale Platten (15), die Führungskarten genannt werden, und Ausnehmungen (28, 29) von rohrförmigen Stulpen (30, 31) mit vertikaler Achse durchqueren, die seitlich in einem freien Raum (17, 27) im Mittenbereich des Führungsrohrs (6) münden, dadurch gekennzeichnet, daß sie aufweist:
- eine Stange (10), die in vertikaler Richtung in ihrer Betriebsstellung in dem Becken (1) angeordnet ist,
- Zentrierungseinrichtungen (34, 35) der Stange (10) im freien Mittenraum (17, 27) des Führungsrohrs (6), an seinem unteren Bereich,
- ein Element (36, 52) in Form einer ebenen Lasche, das um wenigstens eine horizontale Achse (40) am unteren Bereich der Stange (10) zwischen einer eingezogenen Stellung und wenigstens einer ausgefahrenen Betriebsstellungschwenkbeweglich angebracht ist, in der ein äußeres Ende (36a, 54) des laschenförmigen Elements (36, 52) seitlich bezüglich der Stange (10) vorspringt,
- einen Aufnehmer (42, 55), der wenigstens ein Element (65) aufweist, das drehbeweglich um eine Achse am äußeren Ende (36a, 54) des laschenförmigen Elements (36, 52) angebracht ist, derart, daß die Drehachse des Drehelements des Aufnehmers (42) in der Betriebsstellung des laschenförmigen Elements (36, 52) vertikal verläuft,
- Einrichtungen (41, 45) zum Bewegen durch Schwenken des laschenförmigen Elements (36), die ferngesteuert werden, und
- Einrichtungen (39, 66) zum In-Drehung-Versetzen und der Energiezufuhr des Aufnehmers (42, 55) und des Empfangens von Meßsignalen, die von dem Aufnehmer (42, 55) ausgegeben werden.

2. Vorrichtung nach Anspruch 1, dadurch gekennzeichnet, daß das laschenförmige Element (52) eine Meßzelle (54), auf der der Aufnehmer (55) befestigt ist, und zwei parallele Arme (53a, 53b) aufweist, die an einem Ihrer Enden an der Stange (10) angelenkt sind und an ihrem anderen Ende an der Meßzelle (54) angelenkt sind, derart, daß sie ein Gelenkparallelogramm bilden.

3. Vorrichtung nach Anspruch 1, dadurch gekennzeichnet, daß der äußere Bereich (36a) des laschenförmigen Elements (36) an einem Bereich (36b) des laschenförmigen Elements (36) schwenkbeweglich an der Stange (10) mittels eines Anpaßteiles (36c) angebracht ist, das ermöglicht, die Position des Aufnehmers (42) entsprechend der ausgefahrenen Position des laschenförmigen Elements (36) einzustellen.

4. Vorrichtung nach einem der Ansprüche 1, 2 oder 3, dadurch gekennzeichnet, daß die Einrichtungen zum In-Drehung-Versetzen des Drehelements (65) des Aufnehmers (42, 55) durch ein biegsames Element (39, 66) gebildet werden, das entlang der Länge der Stange (10) angeordnet ist, wobei es mit dem Drehelement (65) des Aufnehmers (42, 55) an einem seiner Enden verbunden ist, und ein zweites Ende am oberen Bereich der Stange (10)aufweist, durch die eine Drehung dem biegsamen Element (39, 66), und über dieses dem Aufnehmer (42, 55) übertragen wird.

5. Vorrichtung nach Anspruch 4, dadurch gekennzeichnet, daß das biegsame Übertragungselement der Drehung ein Rohr aus einem weichen Material ist.

6. Vorrichtung nach einem der Ansprüche 1 bis 5, dadurch gekennzeichnet, daß die Drehbewegungseinrichtungen des laschenförmigen Elements (36, 52) und der Einstellung der herausgefahrenen Position der Lasche (36, 52) durch eine Rückholfeder (41, 60) des laschenförmigen Elements (36, 52) in eine Position, die vollständig ausgefahren ist, und durch ein entlang der Axialrichtung der Stange (10) bewegliches Überprüfungselement (45, 62) gebildet werden, das einen Endabschnitt (45a, 62a) in Form einer Ecke aufweist, die dazu dient, mit einem Anschlag (46, 61) zusammenzuwirken, der mit dem laschenförmigen Element (36, 52) verbunden ist.

7. Vorrichtung nach einem der Ansprüche 1 bis 6, dadurch gekennzeichnet, daß eine Andrückfeder (48, 58) auf einer Seite des äußeren Bereichs (36a, 54) des laschenförmigen Elements (36, 52) befestigt ist.

8. Vorrichtung nach einem der Ansprüche 1 bis 7, dadurch gekennzeichnet, daß die Zentrierungseinrichtungen der Stange (10) in dem freien Mittenraum (17, 27) des Führungsrohrs (6) durch einen Anschlag (34), der nach außen auf der äußeren Oberfläche der Stange vorspringt, und durch eine Feder (35) gebildet werden, die an der äußeren Oberfläche der Stange (10) derart befestigt ist, daß sie radial vorspringt und sich in einer Position entgegengesetzt zum Anschlag (34) bezüglich der Achse der Stange befindet.

9. Vorrichtung nach einem der Ansprüche 1 bis 8, dadurch gekennzeichnet, daß der Aufnehmer (42) ein Aufnehmer ist, der zu einem der nachfolgenden Typen gehört: kapazitiver Aufnehmer, Foucault-Strom-Aufnehmer, Ultraschallaufnehmer, Radarlaser.

10. Vorrichtung nach Anspruch 9, dadurch gekennzeichnet, daß der Aufnehmer (55) vom Typ Radarlaser eine Diode (63) und einen drehenden Spiegel (65) aufweist, der an der Meßzelle (54) angebracht ist, wobei er den äußeren Endabschnitt des laschenförmigen Elements (52) bildet.

11. Vorrichtung nach Anspruch 10, dadurch gekennzeichnet, daß die Meßzelle (54) eine Referenzoberfläche (67) aufweist, um eine Eichung der vom Radarlaser durchgeführten Messungen sicherzustellen.
